# EUROPÄISCHE PATENTANMELDUNG

(11) **EP 4 531 266 A1**
(43) Veröffentlichungstag der Anmeldung: **02.04.2025**
(21) Anmeldenummer: 24194363.8
(22) Anmeldetag: 13.08.2024
(51) Int. Cl.: H02P 5/74, A47L 15/00, D06F 37/00, H02P 6/04, H02P 6/26

(54) **VERFAHREN ZUR GLEICHZEITIGEN ANSTEUERUNG EINES DREISTRÄNGIGEN MOTORS IN EINEM ZWEIPHASIGEN BETRIEB UND EINES EINSTRÄNGIGEN MOTORS, MOTORSTEUERUNG UND ELEKTRISCHES HAUSHALTSGERÄT**

(30) Priorität: 27.09.2023 BE 202305796
(71) Anmelder: Miele & Cie. KG, 33332 Gütersloh (DE)
(72) Erfinder: Balzer, Eugen, 33729 Bielefeld (DE); Sammoud, Hafedh, 8090 Kelibia (TN)

(57) **Zusammenfassung**

Die Erfindung betrifft ein Verfahren zur gleichzeitigen Ansteuerung eines dreisträngigen Motors (M1) in einem zweiphasigen Betrieb und eines einsträngigen Motors (M2, M3) eines elektrischen Haushaltsgeräts mittels eines dreiphasigen (U, V, W) Umrichters derart, dass der dreisträngige Motor (M1) mittels einer ersten Phase (U) und einer zweiten Phase (V) des dreiphasigen (U, V, W) Umrichters bestromt wird und der einsträngige Motor (M2, M3) mittels der zweiten Phase (V) und einer dritten Phase (W) des dreiphasigen (U, V, W) Umrichters bestromt wird, wobei der Umrichter mehrere Halbbrücken mit High-Side-Transistoren (T1, T3, T5) und Low-Side-Transistoren (T2, T4, T6) aufweist, wobei jedem der Motoren (M1, M2, M3) jeweils eine Halbbrücke mit einem High-Side-Transistor (T1, T3, T5) und einem Low-Side-Transistor (T2, T4, T6) zugeordnet ist, welche mit PWM-Signalen angesteuert werden, wobei das Verfahren bei parallelem Betrieb mehrerer der Motoren (M1, M2, M3) aufweist:
a) Schalten, in Abhängig von einer Stromrichtung des fließenden Stroms, entweder des zugeordneten High-Side-Transistors (T1, T3, T5) oder des zugeordneten Low-Side-Transistors (T2, T4, T6) und Ausgeschaltetlassen des anderen zugeordneten Low-Side-Transistor (T2, T4, T6) bzw. High-Side-Transistor (T1, T3, T5) während einer oder mehrerer Tastperioden des PWM-Signals.

Ferner betrifft die Erfindung eine Motorsteuerung, die den Umrichter aufweist, der ausgebildet ist, den dreisträngigen Motor (M1) in dem zweiphasigen Betrieb und den einsträngigen Motors (M2, M3) eines elektrischen Haushaltsgeräts gemäß dem Verfahren anzusteuern, sowie ein elektrisches Haushaltsgerät, das die Motorsteuerung aufweist.

## Beschreibung

Verfahren zur gleichzeitigen Ansteuerung eines dreisträngigen Motors in einem zweiphasigen Betrieb und eines einsträngigen Motors, Motorsteuerung und elektrisches Haushaltsgerät

Die Erfindung betrifft ein Verfahren zur gleichzeitigen Ansteuerung eines dreisträngigen Motors in einem zweiphasigen Betrieb und eines einsträngigen Motors, eine Motorsteuerung und ein elektrisches Haushaltsgerät. Insbesondere betrifft die Erfindung ein Verfahren zur gleichzeitigen Ansteuerung eines dreisträngigen Motors in einem zweiphasigen Betrieb und eines einsträngigen Motors eines elektrischen Haushaltsgeräts mittels eines dreiphasigen Umrichters derart, dass der dreisträngige Motor mittels einer ersten Phase und einer zweiten Phase des dreiphasigen Umrichters bestromt wird und der einsträngige Motor mittels der zweiten Phase und einer dritten Phase des dreiphasigen Umrichters bestromt wird, sowie eine Motorsteuerung, die den Umrichter aufweist, der ausgebildet das Verfahren aufzuführen, und ein elektrisches Haushaltsgerät, das die Motorsteuerung enthält.

DE 10 2021 132 938 A1 beschreibt einen gleichzeitigen, geregelten Betrieb von zwei einsträngigen Motoren an einem dreiphasigen B6 Umrichter bei variablen und auch voneinander unterschiedlichen Drehzahlen. Es ist jedoch wünschenswert einen dreisträngigen und einen einsträngigen Motor gleichzeitig anzusteuern.

Der Erfindung stellt sich somit das Problem, ein Verfahren, eine Motorsteuerung und ein elektrisches Haushaltsgerät bereitzustellen, bei denen eine gleichzeitige Ansteuerung eines dreisträngigen Motors in einem zweiphasigen Betrieb und eines einsträngigen Motors eines elektrischen Haushaltsgeräts mittels eines dreiphasigen Umrichters ohne Kopplung oder mit zumindest reduzierter Kopplung zwischen dem dreiphasigen und dem einsträngigen Motor bereitgestellt wird.

Erfindungsgemäß wird dieses Problem durch ein Verfahren mit den Merkmalen des Patentanspruchs 1, eine Motorsteuerung mit den Merkmalen des Patentanspruchs 5 und einem elektrischen Haushaltsgerät mit den Merkmalen des Patentanspruchs 6 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Spannungsfehler eliminiert oder zumindest verringert wird und eine Kopplung zwischen dem dreisträngigen Motor und dem einsträngigen Motor eliminiert oder zumindest verringert wird. Weitere Vorteile der Erfindung sind zudem, dass keine zusätzliche Hardware erforderlich ist und sehr wenig Rechenleistung benötigt wird. Daher ist die Erfindung kostenneutral umsetzbar.

Die Erfindung basiert auf folgender Grundidee: Im Fall eines Betreibens des einsträngigen Motors und des dreisträngigen Motors mittels des dreiphasigen Umrichters fließt, wenn der dreisträngige Motor mittels der ersten Phase und der zweiten Phase des dreiphasigen Umrichters bestromt wird und der einsträngige Motor mittels der zweiten Phase und der dritten Phase des dreiphasigen Umrichters bestromt wird, über die zweite Phase ein Summenstrom beider Motoren. Der Umrichter kann jedoch nicht als ideale Spannungsquelle angesehen werden, so dass die beiden Motoren nicht völlig voneinander entkoppelt sind. Es gibt eine Kopplung, da der Umrichter an jeder Phase einen stromabhängigen Spannungsfehler aufweist. Dies verursacht eine gegenseitige Beeinflussung durch die jeweiligen Phasenströme. Die Beeinflussung findet nicht nur unidirektional statt: Einerseits beeinflusst der durch den dreisträngigen Motor fließende Strom den durch den einsträngigen Motor fließenden Strom, und andererseits beeinflusst der durch den einsträngigen Motor fließende Strom den durch den dreisträngigen Motor fließenden Strom. Hier wird grundlegend davon ausgegangen, dass diese gegenseitige Beeinflussung in den Spannungsfehlern des Umrichters begründet liegt. Bei einem idealen Umrichter würde genau die Spannung am Ausgang anliegen, die auch ausgegeben werden soll. Bei einem realen Umrichter weichen aber Sollwert- und Istwert der Spannung voneinander ab. Der Spannungsfehler hängt daher stark vom Strom ab. Bei einem Strom, der vom Umrichter in Richtung Motor fließt, ist die Istspannung niedriger als die Sollspannung. Fließt der Strom vom Motor in Richtung Umrichter, dann ist die Istspannung höher als die Sollspannung. Werden nun zwei Motoren an derselben Umrichterphase betrieben, dann ergibt sich der Spannungsfehler aus der Summe der beiden Ströme. Dadurch findet eine gegenseitige Beeinflussung statt. Das erfindungsgemäße Verfahren beruht auf dem Grundgedanken, die gegenseitige Beeinflussung der Motorströme zu beheben, indem in Abhängigkeit von einer Stromrichtung des fließenden Stroms entweder der zugeordnete High-Side-Transistor oder der zugeordnete Low-Side-Transistor geschaltet wird und der andere zugeordnete Low-Side-Transistor bzw. High-Side-Transistor ausgeschaltet gelassen wird während einer oder mehrerer Tastperioden des PWM-Signals. Dadurch wird die gegenseitige Beeinflussung der Motorströme verringert, indem eine Modulation ohne Verriegelungszeit bzw. Totzeit verwendet wird.

Die Erfindung betrifft ein Verfahren zur gleichzeitigen Ansteuerung eines dreisträngigen Motors in einem zweiphasigen Betrieb und eines einsträngigen Motors eines elektrischen Haushaltsgeräts mittels eines dreiphasigen Umrichters derart, dass der dreisträngige Motor mittels einer ersten Phase und einer zweiten Phase des dreiphasigen Umrichters bestromt wird und der einsträngige Motor mittels der zweiten Phase und einer dritten Phase des dreiphasigen Umrichters bestromt wird, wobei der Umrichter drei Halbbrücken mit High-Side-Transistoren und Low-Side-Transistoren aufweist. Diese Halbbrücken werden mit PWM (Pulsweitenmodulation)-Signalen angesteuert werden, wobei das Verfahren bei parallelem Betrieb mehrerer der Motoren aufweist:
a) Schalten, in Abhängig von einer Stromrichtung des fließenden Stroms, entweder des zugeordneten High-Side-Transistors oder des zugeordneten Low-Side-Transistors und Ausgeschaltetlassen des anderen zugeordneten Low-Side-Transistor bzw. High-Side-Transistor während einer oder mehrerer Taktperioden des PWM-Signals.

In einer bevorzugten Ausführungsform weist der Schritt a) auf:
- Schalten des zugeordneten High-Side-Transistors, während der zugeordnete Low-Side ausgeschaltet bleibt, wenn ein positiver Strom fließt (vom Umrichter zum Motor),
- Schalten des zugeordneten Low-Side-Transistor, während der zugeordnete High-Side-Transistor ausgeschaltet bleibt, wenn ein negativer Strom fließt (vom Motor zum Umrichter).

Ist der Strom positiv und der High-Side-Transistor und der Low-Side-Transistor sind aus, was während der Verriegelungszeit der Fall ist, dann fließt der Strom über die Low-Side Diode. Die Spannung beträgt in dieser Zeit näherungsweise 0 V. Bei der Modulation mit Verriegelungszeit fehlt somit bei positiver Stromrichtung, d.h. wenn der Strom von dem Umrichter zum Motor fließt, etwas Spannungszeitfläche. Fließt der Strom bei ausgeschalteten High-Side- und Low-Side-Transistoren in negativer Richtung, dann fließt der Strom über die High-Side Diode zurück. Bei negativer Stromrichtung, d.h. der Strom fließt vom Motor zum Umrichter, kommt somit ungewollt Spannungszeitfläche hinzu. Diese Spannungszeitflächen sind Bestandteile der Spannungsfehler und machen den größten Teil davon aus. Auf die Verriegelungszeit kann verzichtet werden, insbesondere, wenn der Betrag des jeweiligen Phasenstroms groß genug ist. Aufgrund der Motorinduktivität kann der Strom sich nicht schnell ändern. Ist der Strom deutlich positiv, dann kann der Strom nicht über den Low-Side Transistor fließen. Deswegen kann dieser dann dauerhaft ausgeschaltet bleiben und bleibt dies bevorzugt. Dann wird bevorzugt nur noch der High-Side Transistor geschaltet, dieser muss dann nicht die Verriegelungszeit einhalten. Ist der Strom deutlich negativ, dann kann der Strom nicht über den High-Side Transistor fließen. Deswegen kann der High-Side Transistor dauerhaft ausgeschaltet bleiben und bleibt dies bevorzugt. Dann wird nur noch der Low-Side Transistor geschaltet, dieser muss dann nicht die Verriegelungszeit einhalten.

Bevorzugt wird der Schritt a) in Abhängigkeit von einem Betrag des fließenden Stroms ausgeführt. Dadurch wird der Schritt a) unabhängig davon ausgeführt, ob der Strom positiv oder negativ ist.

In einer bevorzugten Ausführungsform
- wird der Schritt a) ausgeführt, wenn der Betrag des fließenden Stroms größer als oder gleich einem vorbestimmten Schwellwert ist, und
- wird der fließende Strom mit Verriegelungszeit moduliert, wenn der Betrag des fließenden Stroms kleiner als der vorbestimmte Schwellwert ist.

Ist der Betrag des Stromes kleiner als der vorbestimmte Schwellwert, der bevorzugt nahe Null ist, wird bevorzugt weiterhin die Verriegelungszeit eingehalten.

Die Erfindung betrifft ferner eine Motorsteuerung, aufweisend einen Umrichter, der mehrere Halbbrücken mit High-Side-Transistoren und Low-Side-Transistoren aufweist und der ausgebildet ist, einen dreisträngigen Motor in einem zweiphasigen Betrieb und einen einsträngigen Motors eines elektrischen Haushaltsgeräts gemäß einem Verfahren nach einer oder mehreren der vorangehend beschriebenen Ausführungsformen gleichzeitig anzusteuern, wobei jedem der Motoren jeweils 2 Halbbrücken mit jeweils einem High-Side-Transistor und einem Low-Side-Transistor zugeordnet sind.

Der Umrichter weist bevorzugt eine B6-Brücke auf. Er weist bevorzugt eine erste H-Brücke auf, die ausgebildet ist, den dreisträngigen Motor zu betreiben, und eine zweite H-Brücke auf, die ausgebildet ist, den einsträngigen Motor zu betreiben. Die erste H-Brücke weist bevorzugt eine erste Halbbrücke und eine zweite Halbbrücke auf. Die zweite H-Brücke weist bevorzugt die zweite Halbbrücke und eine dritte Halbbrücke auf. Der dreisträngige Motor und der einsträngige Motor können daher über die zweite Halbbrücke gemeinsam betrieben werden.

Die Erfindung betrifft ferner ein elektrisches Haushaltsgerät, das einen dreisträngigen Motor und einen einsträngigen Motors und die Motorsteuerung nach einer oder mehreren der vorangehend beschriebenen Ausführungsformen aufweist.

Bevorzugt ist das elektrische Haushaltsgerät als wasserführendes elektrisches Haushaltsgerät ausgebildet. Bevorzugter ist das elektrische Haushaltsgerät als Geschirrspüler, Desinfektor, Waschautomat, Waschtrockner oder Trockner ausgebildet. Besonders bevorzugt ist das elektrische Haushaltsgerät ein Geschirrspüler.

In einer bevorzugten Ausführungsform ist der dreisträngige Motor ein Motor einer Umwälzpumpe. Bevorzugt ist der einsträngige Motor ein Motor einer Ablaufpumpe oder ist ein Motor eines Heißluftgebläses. Das elektrische Haushaltsgerät kann auch mehrere einsträngige Motoren aufweisen, die jeweils einzeln gleichzeitig mit dem dreisträngigen Motor ansteuerbar sind. Beispielsweise weist es zwei einsträngige Motoren auf, die von denen einer ein Motor einer Ablaufpumpe ist und der andere ein Motor eines Heißluftgebläses ist. Die Motorsteuerung enthält dann z.B. ein Relais zum Schalten zwischen den beiden einsträngigen Motoren.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: ein Schaltbild einer erfindungsgemäßen Motorsteuerung;
- Fig. 2: ein Teil-Schaltbild der in Fig. 1 gezeigten Motorsteuerung;
- Fig. 3: einen Strom- und Spannungsverlauf in Abhängigkeit von Schaltzeiten bei positivem Strom bei einer Modulation mit Totzeit;
- Fig. 4: einen Strom- und Spannungsverlauf in Abhängigkeit von Schaltzeiten bei negativem Strom bei einer Modulation mit Totzeit;
- Fig. 5.: einen Strom- und Spannungsverlauf in Abhängigkeit von Schaltzeiten bei positivem Strom bei Betrieb mit dem erfindungsgemäßen Verfahren;
- Fig. 6: einen Strom- und Spannungsverlauf in Abhängigkeit von Schaltzeiten bei negativem Strom bei Betrieb mit dem erfindungsgemäßen Verfahren; und
- Fig. 7: einen Spannungsfehler bei Betrieb mit einem nicht-erfindungsgemäßen Verfahren und dem erfindungsgemäßen Verfahren.

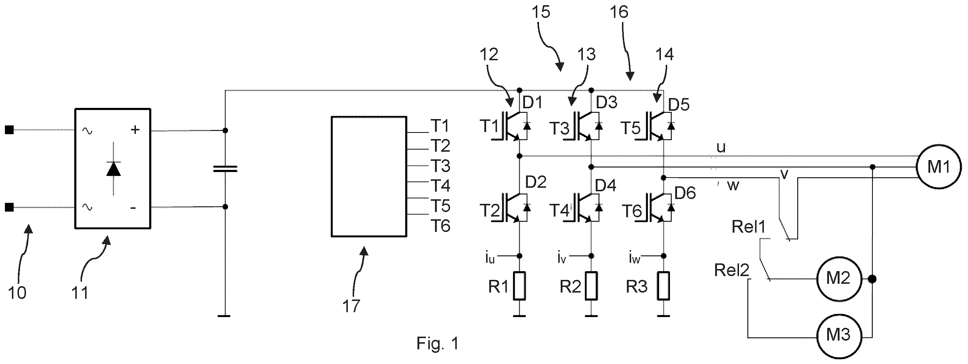

Fig. 1 zeigt ein Schaltbild einer erfindungsgemäßen Motorsteuerung. Die Motorsteuerung weist den Umrichter mit einer B6 Brücke auf. Die B6 Brücke weist eine erste Halbbrücke 12 und eine zweite Halbbrücke 13 auf, die gemeinsam eine erste H-Brücke 15 bilden. Die erste Halbbrücke 12 weist einen ersten High-Side-Transistor T1, einen zweiten Low-Side-Transistor T2, eine erste Diode D1, eine zweite Diode D2 und einen ersten Messwiderstand R1 als ersten Shunt auf. Die zweite Halbbrücke 13 weist einen dritten High-Side-Transistor T3, einen vierten Low-Side-Transistor T4, einer dritte Diode D3, eine vierte Diode D4 und einen zweiten Messwiderstand R2 als zweiten Shunt auf. Die zweite Halbbrücke 13 und eine dritte Halbbrücke 14 bilden eine zweite H-Brücke 16. Die dritte Halbbrücke weist einen fünften High-Side-Transistor T5, einen sechsten Low-Side-Transistor T6, eine fünfte Diode D5, eine sechste Diode D6 und einen dritten Messwiderstand R3 als dritten Shunt auf.

Die Motorsteuerung ist zur gleichzeitigen Ansteuerung eines dreisträngigen Motors M1 in einem zweiphasigen Betrieb und eines einsträngigen Motors - hier rein beispielhaft zweier einsträngiger Motoren M2, M3 - beschrieben. Sie kann aber auch nur zur Ansteuerung eines einsträngigen Motors ausgelegt sein. Wenn die Motorsteuerung die zwei einsträngigen Motoren M2, M3 aufweist, weist sie ein Relais Rel1 und ein weiteres Relais Rel2 auf. Diese Relais müssen nicht in der Motorsteuerung vorhanden sein, wenn sie nur einen der zwei einsträngigen Motoren M2, M3 aufweist. Der dreisträngige Motor M1 wird mittels einer ersten Phase U und einer zweiten Phase V des dreiphasigen U, V, W Umrichter bestromt bzw. mit Strom iᵤ, iᵥ versorgt, und der einsträngige Motor M2, M3 wird mittels der zweiten Phase V und einer dritten Phase W mittels des dreiphasigen U, V, W Umrichters bestromt bzw. mit Strom iᵥ, i_{w} versorgt.

Mittels des Rel1 wird eine Phase W zwischen dem dreisträngigen Motor M1 und der Motorsteuerung getrennt. Stattdessen wird damit einer der beiden einsträngigen Motoren M2, M3 eingeschaltet. Mit dem weiteren Relais Rel2 kann zwischen dem einsträngigen Motor M2 und dem einsträngigen Motor M3 gewechselt werden. Die Motoren M1, M2 oder M3 sind an einer Phase V zusammengeschlossen. Wenn das Relais Rel1 umgeschaltet wird, läuft der Motor M1 zweiphasig an Phase U und Phase V weiter. Wird nun einer der einsträngigen Motoren M2 oder M3 bestromt an der Phase W und Phase V, dann fließt über die Phase V der Summenstrom beider Motoren M1, M2 oder M3. Ob der dreisträngige Motor M1 mit dem einsträngigen Motor M2 oder dem einsträngigen Motor M3 parallel betrieben wird, ist unerheblich.

Die Motorsteuerung wird über einen Spannungseingang 10 an einer Wechselspannung betrieben, indem die Wechselspannung des Spannungseingangs 10 über einen Gleichrichter 11 in eine Gleichspannung gewandelt und dann mittels eines Glättungskondensators geglättet wird. Die geglättete Gleichspannung wird nun als Zwischenkreisspannung parallel an die erste Halbbrücke 12 und an die zweite Halbbrücke 13 gelegt, welche gemeinsam die erste H-Brücke 15 bilden. Den beiden Halbbrücken 12, 13 ist der dreisträngige Motor M1 zugeordnet, welcher von der ersten H-Brücke 15 betrieben werden kann. Hierzu weist der Umrichter eine Steuer- oder Regeleinrichtung 17 auf, die über die Dioden D1, D2, D3, D4 jeweils mit den vier Transistoren T1-T4 verbunden sind. Auch sind die beiden Messwiderstände R1, R2 mit der Steuer- oder Regeleinrichtung 17 verbunden, so dass im Betrieb die Ströme in dem dreisträngigen Motor M1 erfasst und der dreisträngige Motor M1 hierauf basierend von der Steuer- oder Regeleinrichtung 17 geregelt betrieben werden kann. Die einsträngigen Motoren M2, M3 werden mit einer zweiten H-Brücke 16 seitens der Steuer- oder Regeleinrichtung 17 betrieben. Hierzu ist die Steuer- oder Regeleinrichtung 17 über die Dioden D3, D4, D5, D6 jeweils mit den vier Transistoren T4-T6 verbunden. Auch sind die beiden Messwiderstände R2, R3 mit der Steuer- oder Regeleinrichtung 17 verbunden. Entsprechend können die einsträngigen Motoren M2, M3 seitens der Steuer- oder Regeleinrichtung 17 geregelt, basierend auf den Strömen im Betrieb, betrieben werden.

Die zweite Halbbrücke 13 kann somit zum einen entweder von der ersten H-Brücke 15 zum Betreiben des dreisträngigen Motors M1 oder von der zweiten H-Brücke 16 zum Betreiben der einsträngigen Motoren M2, M3 verwendet werden. Zum anderen kann die zweite Halbbrücke 13 auch gleichzeitig als Bestandteil beider H-Brücken 15, 16 genutzt bzw. betrieben werden, um Motoren M1, M2 bzw. M3 gleichzeitig und somit parallel zueinander zu betreiben.

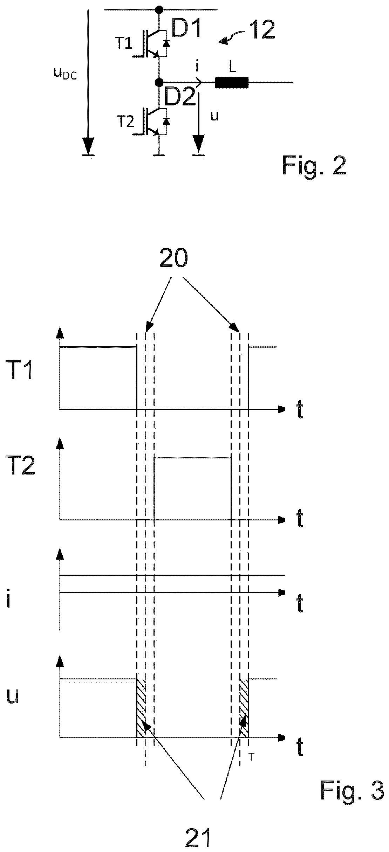

Fig. 2 zeigt ein Teil-Schaltbild der in Fig. 1 gezeigten Motorsteuerung. Gezeigt ist die erste Halbbrücke 12 mit dem ersten High-Side-Transistor T1 und dem zweiten Low-Side-Transistor T2, durch die ein Strom i fließt, während gleichzeitig eine Gleichspannung u_{DC} anliegt und die Spannung u ausgegeben wird.

Fig. 3 zeigt einen Strom- und Spannungsverlauf in Abhängigkeit von Schaltzeiten bei positivem Strom bei einer Modulation mit Verriegelungszeit bzw. Totzeit. Ist der Strom i positiv und die Transistoren T1, T2 sind aus, was während einer Verriegelungszeit bzw. Totzeit 20 der Fall ist, dann fließt der Strom i über die Diode D2. Die Spannung u beträgt in dieser Zeit näherungsweise 0 V. Bei der Modulation mit Totzeit 20 fehlt bei positiver Stromrichtung, wenn der Strom i von dem Umrichter zum Motor fließt, eine Spannungszeitfläche 21. Die fehlende Spannungszeitfläche 21 ist Bestandteil von Spannungsfehlern.

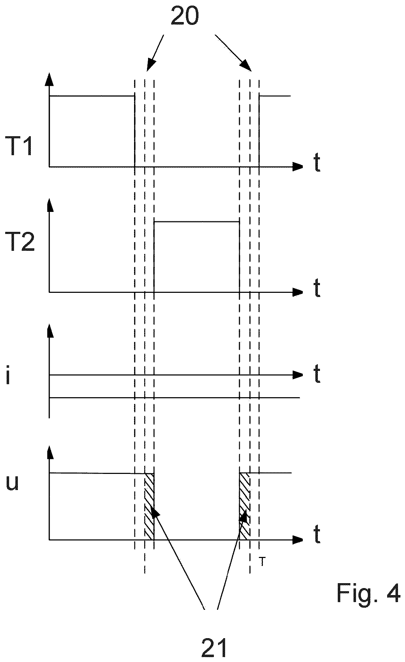

Fig. 4 zeigt einen Strom- und Spannungsverlauf in Abhängigkeit von Schaltzeiten bei negativem Strom bei einer Modulation mit Totzeit. Fließt der Strom i bei ausgeschalteten Transistoren T1, T2 in negativer Richtung, dann fließt der Strom i über die Diode D1 zurück. Die Spannung u beträgt in dieser Zeit näherungsweise u_{DC}. Bei negativer Stromrichtung, d.h. der Strom i fließt vom Motor zum Umrichter, kommt somit Spannungszeitfläche 21 hinzu. Die hinzu kommende Spannungszeitfläche 21 ist Bestandteil von Spannungsfehlern.

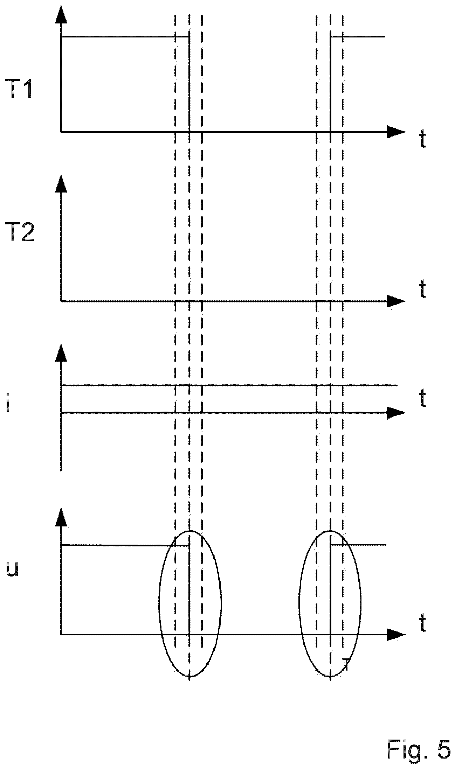

Fig. 5. Zeigt einen Strom- und Spannungsverlauf in Abhängigkeit von Schaltzeiten bei positivem Strom bei Betrieb mit dem erfindungsgemäßen Verfahren. Das Verfahren wird rein beispielhaft anhand des in Fig. 2. gezeigten Teil-Schaltbilds erläutert. Das Verfahren umfasst Schalten, in Abhängig von einer Stromrichtung des fließenden Stroms, entweder des zugeordneten High-Side-Transistors T1 oder des zugeordneten Low-Side-Transistors T2 und Ausgeschaltetlassen des anderen zugeordneten Low-Side-Transistor T2 bzw. High-Side-Transistor T1 während einer oder mehrerer Tastperioden des PWM-Signals. Ist der Strom i positiv, dann kann er nicht über den Low-Side Transistor T2 fließen. Deswegen ist dieser dann dauerhaft ausgeschaltet. Nur der High-Side Transistor T1 wird geschaltet. Dieser muss dann nicht die Totzeit (nicht gezeigt) einhalten.

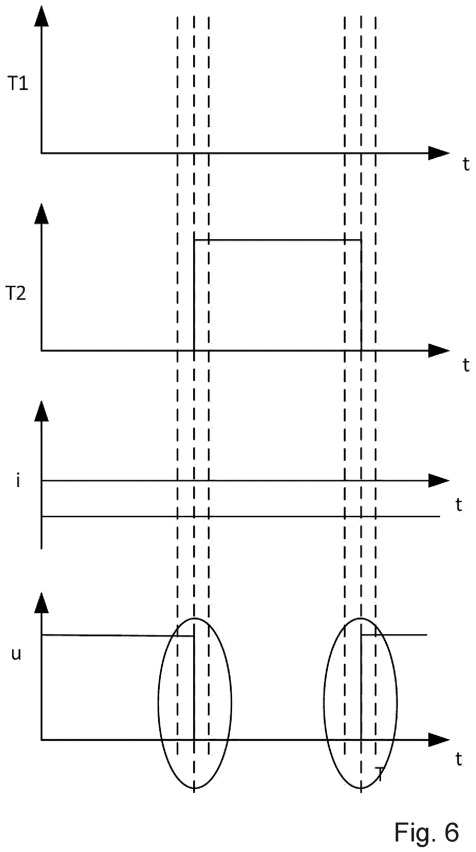

Fig. 6 zeigt einen Strom- und Spannungsverlauf in Abhängigkeit von Schaltzeiten bei negativem Strom bei Betrieb mit dem erfindungsgemäßen Verfahren. Das Verfahren wird rein beispielhaft anhand des in Fig. 2. gezeigten Teil-Schaltbilds erläutert. Das Verfahren umfasst Schalten, in Abhängig von einer Stromrichtung des fließenden Stroms, entweder des zugeordneten High-Side-Transistors T1 oder des zugeordneten Low-Side-Transistors T2 und Ausgeschaltetlassen des anderen zugeordneten Low-Side-Transistor T2 bzw. High-Side-Transistor T1 während einer oder mehrerer Tastperioden des PWM-Signals. Ist der Strom i negativ, dann kann der Strom i nicht über den High-Side Transistor T1 fließen. Deswegen ist der High-Side Transistor T1 dauerhaft ausgeschaltet. Dann wird nur noch der Low-Side Transistor T2 geschaltet. Dieser muss dann nicht die Totzeit (nicht gezeigt) einhalten.

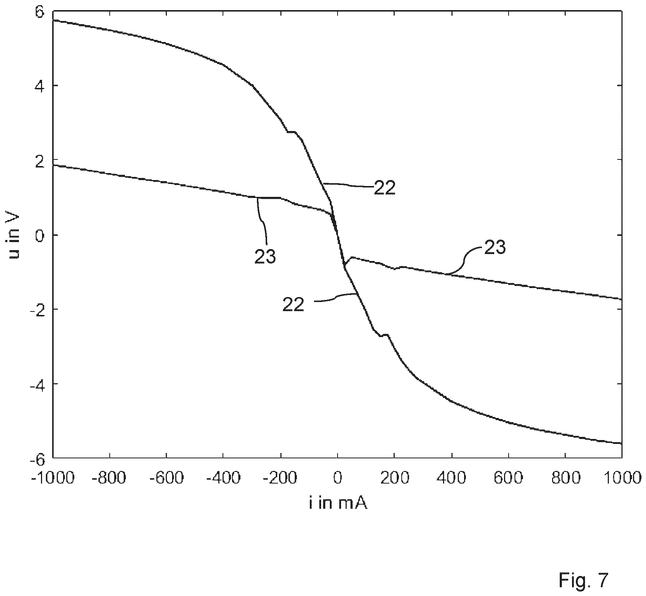

Fig. 7 zeigt einen Spannungsfehler bei Betrieb mit und ohne Modulation mit Totzeit. Bei der Modulation ohne Totzeit 23 verringert sich der Spannungsfehler gegenüber der Modulation mit Totzeit 22 deutlich.

### Bezugszeichenliste

D1-D6 Diode
i Strom
iᵤ in der ersten Phase fließender Strom
iᵥ in der zweiten Phase fließender Strom
i_{w} in der dritten Phase fließender Strom
M1 dreisträngiger Motor
M2, M3 jeweils einsträngiger Motor
R1-R3 Messwiderstände; Shunts
Rel1,Rel2 Relais
t Zeit
T1, T3, T5 jeweils High-Side-Transistor
T2, T4, T6 jeweils Low-Side-Transistor
u Spannung
U_{DC} Gleichspannung
U erste Phase
V zweite Phase
W dritte Phase
10 Spannungseingang
11 Gleichrichter
12 erste Halbbrücke
13 zweite Halbbrücke
14 dritte Halbbrücke
15 erste H-Brücke
16 zweite H-Brücke
17 Regel- oder Steuereinrichtung
20 Totzeit
21 Spannungszeitfläche
22 Modulation ohne Totzeit
23 Modulation mit Totzeit

## Patentansprüche

1. Verfahren zur gleichzeitigen Ansteuerung eines dreisträngigen Motors (M1) in einem zweiphasigen Betrieb und eines einsträngigen Motors (M2, M3) eines elektrischen Haushaltsgeräts mittels eines dreiphasigen (U, V, W) Umrichters derart, dass der dreisträngige Motor (M1) mittels einer ersten Phase (U) und einer zweiten Phase (V) des dreiphasigen (U, V, W) Umrichters bestromt wird und der einsträngige Motor (M2, M3) mittels der zweiten Phase (V) und einer dritten Phase (W) des dreiphasigen (U, V, W) Umrichters bestromt wird, wobei der Umrichter mehrere Halbbrücken mit High-Side-Transistoren (T1, T3, T5) und Low-Side-Transistoren (T2, T4, T6) aufweist, wobei jedem der Motoren (M1, M2, M3) jeweils eine Halbbrücke mit einem High-Side-Transistor (T1, T3, T5) und einem Low-Side-Transistor (T2, T4, T6) zugeordnet ist, welche mit PWM-Signalen angesteuert werden, wobei das Verfahren bei parallelem Betrieb mehrerer der Motoren (M1, M2, M3) aufweist:
a) Schalten, in Abhängig von einer Stromrichtung des fließenden Stroms, entweder des zugeordneten High-Side-Transistors (T1, T3, T5) oder des zugeordneten Low-Side-Transistors (T2, T4, T6) und Ausgeschaltetlassen des anderen zugeordneten Low-Side-Transistor (T2, T4, T6) bzw. High-Side-Transistor (T1, T3, T5) während einer oder mehrerer Tastperioden des PWM-Signals.

2. Verfahren nach Anspruch 1, **dadurch gekennzeichnet, dass** der Schritt a) aufweist:
- Schalten des zugeordneten High-Side-Transistors (T1, T3, T5), während der zugeordnete Low-Side (T2, T4, T6) ausgeschaltet bleibt, wenn ein positiver Strom fließt,
- Schalten des zugeordneten Low-Side-Transistor (T2, T4, T6), während der zugeordnete High-Side-Transistor (T1, T3, T5) ausgeschaltet bleibt, wenn ein negativer Strom fließt.

3. Verfahren nach Anspruch 1 oder 2, **dadurch gekennzeichnet, dass** der Schritt a) in Abhängigkeit von einem Betrag des fließenden Stroms ausgeführt wird.

4. Verfahren nach Anspruch 3, **dadurch gekennzeichnet, dass**
- der Schritt a) ausgeführt wird, wenn der Betrag des fließenden Stroms größer als oder gleich einem vorbestimmten Schwellwert ist, und
- der fließende Strom mit Verriegelungszeit moduliert wird, wenn der Betrag des fließenden Stroms kleiner als der vorbestimmte Schwellwert ist.

5. Motorsteuerung, aufweisend einen Umrichter, der mehrere Halbbrücken mit High-Side-Transistoren (T1, T3, T5) und Low-Side-Transistoren (T2, T4, T6) aufweist und der ausgebildet ist, einen dreisträngigen Motor (M1) in einem zweiphasigen Betrieb und einen einsträngigen Motors (M2, M3) eines elektrischen Haushaltsgeräts gemäß einem Verfahren nach einem der vorangehenden Ansprüche gleichzeitig anzusteuern, wobei jedem der Motoren (M1, M2, M3) jeweils eine Halbbrücke mit einem High-Side-Transistor (T1, T3, T5) und einem Low-Side-Transistor (T2, T4, T6) zugeordnet ist.

6. Elektrisches Haushaltsgerät, aufweisend einen dreisträngigen Motor (M1) und einen einsträngigen Motors (M2, M3) und die Motorsteuerung nach Anspruch 5.

7. Elektrisches Haushaltsgerät nach Anspruch 6, **dadurch gekennzeichnet, dass** es als Geschirrspüler, Desinfektor, Waschautomat, Waschtrockner oder Trockner ausgebildet ist.

8. Elektrisches Haushaltsgerät nach Anspruch 6 oder 7, **dadurch gekennzeichnet, dass** der dreisträngige Motor (M1) ein Motor einer Umwälzpumpe ist und ein einsträngiger Motor (M2) ein Motor einer Ablaufpumpe (M2) ist und/oder ein einsträngiger Motor (M3) ein Motor eines Heißluftgebläse (M3) ist.
